# EUROPÄISCHE PATENTANMELDUNG

(11) **EP 1 710 786 A1**
(43) Veröffentlichungstag der Anmeldung: **11.10.2006**
(21) Anmeldenummer: 05102646.6
(22) Anmeldetag: 04.04.2005
(51) Int. Cl.: G10L 13/04, G09B 17/00, G09B 5/00

(54) **Elektronisches Leselernhilfegerät und Verfahren unter Nutzung eines elektronischen Leselernhilfegeräts**

(71) Anmelder: Scheimann, Gerd, 80801 München (DE); Kochan, Barbara, 13465 Berlin (DE); Schröter, Elke, 12681 Berlin (DE)
(72) Erfinder: Scheimann, Gerd, 80801 München (DE); Kochan, Barbara, 13465 Berlin (DE); Schröter, Elke, 12681 Berlin (DE)
(74) Vertreter: Grünecker, Kinkeldey, Stockmair & Schwanhäusser Anwaltssozietät

(57) **Zusammenfassung**

Die Erfindung betrifft ein vorzugsweise mobiles elektronisches Leselemhilfegerät mit einem Mittel zum Eingeben eines Strings aus Buchstaben, einem Mittel zum Anzeigen des Strings und einem Mittel zur akustischen Wiedergabe des Strings, wobei zur Verbesserung des Lesenlernens eine Steuereinheit so konfiguriert ist, dass folgend auf jede Eingabe eines Buchstabens eines Strings das Mittel zur akustischen Wiedergabe den bis zur letzten Eingabe eingegebenen String in seiner Gesamtheit den Ausspracheregeln konform als Lautkombination automatisch wiedergibt. Die Erfindung betrifft weiterhin ein Verfahren unter Nutzung einer solchen elektronischen Lernhilfe.

## Beschreibung

Die Erfindung betrifft ein elektronisches Leselernhilfegerät mit einem Mittel zum Eingeben eines Strings aus alphanumerischen Zeichen, einem Mittel zum Anzeigen des Strings und einem Mittel zur akustischen Wiedergabe des Strings. Die Erfindung betrifft weiterhin ein Verfahren unter Nutzung eines elektronischen Leselernhilfegeräts mit einem Mittel zum Eingeben eines Strings aus alphanumerischen Zeichen, insbesondere Buchstaben und ggf. Ziffern, einem Mittel zum Anzeigen des Strings, und einem Mittel zur akustischen Wiedergabe des Strings.

Zentrale Komponenten des Leselernprozesses in Sprachen mit einer alphabetischen Schrift sind erstens der Erwerb der Buchstabe-Lautbeziehungen (Graphem-Phonem-Korrespondenz, GPK) und zweitens das Zusammenziehen der Laute, die Lautsynthese bzw. Koartikulation.

Herkömmlicherweise werden Kindern diese Fertigkeiten mit Hilfe von Fibeln vermittelt,. Dabei sind die Kinder darauf angewiesen, dass eine lesekundige Person, z. B. Lehrer oder Eltern, ihnen sagt, welchen Laut welcher Buchstabe repräsentiert und wie die - den Buchstaben eines Wortes entsprechenden - Laute zum gesprochenen Wort zusammengezogen, also synthetisiert, werden. Herkömmlicherweise wird die Reihenfolge, in der die Kinder die GPK erlernen sollen, durch die Fibel oder den Lehrer vorgegeben. Ferner wird dafür ein gewisser Zeitraum für das Erlernen aller GPK festgelegt, wie beispielsweise etwa das erste Schuljahr. Außerdem wird vom Fibelautor oder vom Lehrer das Wortmaterial entsprechend der festgelegten Reihenfolge der zu erlernenden GPK festgelegt. Dies bedeutet, dass alle Kinder einer Schulklasse im Wesentlichen im Gleichschritt das festgelegte Pensum abzuarbeiten haben. Die Erfahrung zeigt, dass dabei das einzelne Kind nicht dem individuellen Grad seiner je aktuellen Möglichkeiten entsprechend gefördert wird: Die einen Kinder werden in ihrem möglichen Lernfortschritt gebremst, andere sind überfordert. Zudem bleibt das Lesen eine schulische Aktivität, die der Anleitung durch den Lehrer bedarf. Eine interessegeleitete Anwendung des Lesens im außerunterrichtüchen und außerschulischen Leben wird dadurch erschwert. Dies führt in vielen Fällen dazu, dass aus den Kindern keine (freiwilligen) Leser werden. So verlässt beispielsweise in Deutschland fast ein Viertel eines Jahrganges die Schule als bestenfalls funktionale Analphabeten.

Seit einiger Zeit bieten Spielwarenhersteller Spielcomputer an, mit denen Kinder lernen können, die Buchstaben des Alphabets zu benennen oder zu lautieren und ggf. auch einige, vorgegebene Wörter am schließlich eingeprägten Schriftbild wiederzuerkennen. In diesen Spielcomputern werden vom Spielcomputer einzelne Buchstaben entweder buchstabiert oder lautiert akustisch ausgegeben und werden vom Kind eingegebene im Computer vorgegebene Wörter in ihrer Gesamtheit ausgesprochen. Diese Spielcomputer haben jedoch den Nachteil, dass nur dem Computer schon bekannte Worte von diesem ausgesprochen werden können und es somit an der von den Kindern benötigten Flexibilität fehlt, da beliebige Wörter, die das Kind sieht, nicht vorprogrammiert sind. Insbesondere verhilft dabei das reine Buchstabieren gerade nicht zum Lesenlernen, sondern es ist sogar lernhemmend, da die Buchstabennamen, z.B. "emm" für M oder m, beim Synthesevorgang zu falschen Lautgebilden führen, die das Zielwort oft nicht erkennen lassen, z.B. "'emm-a-emm-a" also ausgesprochen Emma anstatt M-a-m-a.
Außerdem ist die Sprachqualität meist aufgrund der verwendeten elektronischen Bausteine gering, da sich einerseits diese Computer, als Spielsache, im unteren Preissegment befinden und andererseits eine Vielzahl an verschiedenen vorprogrammierten Anwendungen angeboten werden um die Attraktivität des Produkts zu erhöhen. Diese Computer sind somit zum erfolgreichen Erlernen des Lesens ungeeignet und unzureichend.

Es ist daher Aufgabe der Erfindung ein elektronisches Leselernhilfegerät und ein Verfahren unter Nutzung einer elektronischen Lernhilfe bereitzustellen, die ein verbessertes selbstständiges Lesenlernen ermöglichen.

Diese Aufgabe wird mit dem elektronischen Leselernhilfegerät nach Anspruch 1, sowie den Verfahren nach Anspruch 9 und/oder 12 gelöst.

Demnach umfasst das elektronische Leselernhilfegerät neben dem Mittel zum Eingeben eines Strings aus alphanumerischen Zeichen, also Buchstaben und gf. Ziffern, dem Mittel zum Anzeigen des Strings und dem Mittel zur akustischen Wiedergabe des Strings auch eine Steuereinheit, die so konfiguriert ist, dass folgend auf jede Eingabe eines alphanumerischen Zeichens eines Strings das Mittel zur akustischen Wiedergabe den bis zur letzten Eingabe eingegebenen String in seiner Gesamtheit den Ausspracheregeln konform als Lautkombination automatisch wiedergibt.

Das erfindungsgemäße elektronische Leselernhilfegerät berücksichtigt, dass Kinder zum Lernen des Lesens nicht nur lernen müssen, Laute einzelnen Buchstaben zuzuordnen, sondern dass sie auch erkennen müssen, wie beim Aufbau eines Wortes aus einzelnen Buchstaben sukzessive die einzelnen Laute kombiniert werden, um somit schließlich einem geschriebenen Wort die komplette, der geltenden Aussprache entsprechende Lautkombination zuordnen zu können. Im Gegensatz zu dem aus dem Stand der Technik bekannten Spielcomputer lautiert somit das erfindungsgemäße elektronische Leselernhilfegerät nicht nur einzelne Buchstaben oder ganze Wörter, sondern gibt nach jeder Eingabe automatisch, d.h. ohne, dass der Benutzer ein zusätzliche Eingabe machen muss, eine - den Ausspracheregeln entsprechende - Lautkombination des gesamten vorher eingegebenen Strings aus. Das Kind, das nach und nach Buchstaben eingibt, die es beispielsweise abschreibt, hört somit nach und nach, wie sich die Laute kombinieren und schließlich zum komplett ausgesprochenen Wort werden.

Weiterhin bietet das erfindungsgemäße elektronische Lemgerät folgende Vorzüge: Die Kinder können sowohl die GPK als auch die Lautsynthese bzw. Koartikulation unabhängig von einer lesekundigen Person erwerben, und zwar angetrieben durch ihre natürliche Neugier und im individuell fruchtbaren Moment. Kinder möchten wissen was geschrieben steht, wenn sie Buchstaben irgendwo sehen, beispielsweise auf Straßenschildern, in Büchern, Zeitungen, Zeitschriften oder am Femseher. Mit Hilfe der auf spezifische Weise synthetisierenden Sprachausgabe (Lesesynthese) können die Kinder darüber hinaus jeweils diejenigen GPK erfahren, die sie gerade brauchen, um ein bestimmtes sie interessierendes Wort zu entschlüsseln - und sie können in diesem Moment auch erfahren, wie die Laute zu diesem sie interessierenden Wort zusammengezogen (synthetisiert) werden. Aktuell interessierende Eindrücke bleiben besser haften, der Lernerfolg ist also nachhaltiger als mittels herkömmlicher Medien und Methoden. Ferner erfahren die Kinder beim Entziffern sie interessierender Wörter aus ihrer Umgebung, welchen Wert das Lesen für sie persönlich in ihrem Leben hat, und zwar hier und jetzt - nicht erst "später". Dies ist ein so starker Lemantrieb, dass die Kinder das Pensum (alle GPK und die Lesesynthese) - in individuell interessegeleiteter Reihenfolge - sehr viel schneller erlernen können als ohne das Gerät.

Zusammenfassend kann der besondere und nachhaltige Nutzen des erfindungsgemäßen elektronischen Leselernhilfegeräts wie folgt beschrieben werden: Die Kinder werden früher lesen lernen, z. B. bereits in der Vorschule, die Kinder lernen schneller das alphabetische Prinzip der Schrift, weil sie individueller und intensiver involviert sind und die Kinder können das Lesen selbstorganisiert und eigenständig erlernen, ohne Hilfe eines Erwachsenen.

Vorzugsweise kann die Steuereinheit der elektronischen Lemhilfe ferner so konfiguriert sein, dass die Anzeige des eingegebenen Strings und die akustische Wiedergabe im Wesentlichen zeitgleich stattfinden. Dies erhöht die Assoziierung einer Lautkombination mit der entsprechenden Buchstabenkombination.

Günstigerweise kann für die Steuereinheit eine Sprachsyntheseeinheit zum Erstellen eines akustischen Wiedergabesignals entsprechend dem eingegebenen String benutzt werden, wobei das Wiedergabesignal dann vom Mittel zur akustischen Wiedergabe ausgegeben wird. Um den Lemerfolg weiter i. S. der Lesesynthese bzw. Koartikulation zu fördern, ist die Nutzung einer Sprachsyntheseeinheit von Vorteil, da der Benutzer der Lerneinheit beliebige Buchstabenkombinationen eingeben kann, die dann den Ausspracheregeln konform von der elektronischen Lernhilfe akustisch wiedergegeben werden, ohne dabei auf fest vorgegebene, gespeicherte Wörter beschränkt zu sein.

Gemäß einer weiteren Ausführungsform kann das elektronische Leselernhilfegerät ferner eine Speichereinheit zum Speichern von Strings, insbesondere von Wörtern, aufweisen, wobei die Steuereinheit so konfiguriert ist, dass vor der Eingabe eines ersten Buchstabens ein gespeicherter String über das Mittel zum Anzeigen angezeigt wird. Der Benutzer der elektronischen Lerneinheit benötigt somit keine externe Vorlage, die er abschreibt und in das elektronische Leselernhilfegerät eingibt, sondern er kann auf die gespeicherten Worte zurückgreifen, die ihm vom Mittel zum Anzeigen angezeigt werden. Dies kann beispielsweise auch mit der Benutzung von Begleitmaterial kombiniert werden. Dies könnte auch in der Weise geschehen, dass der Benutzer mit dem Mittel der Anzeige als auch mit dem Mittel der akustischen Lesesynthese (Sprachausgabe) bestimmte gespeicherte Sätze oder Textabschnitte abrufen und in einer vorteilhaft geeigneten Weise visuell und akustisch wahrnehmen könnte.

Vorteilhafterweise kann das elektronische Leselernhilfegerät ferner eine Speichereinheit (13) zum Speichern von Wörtern und/oder Bildern aufweisen, wobei die Steuereinheit (13) so konfiguriert ist, dass nach Eingabe eines ersten Buchstabens ein gespeichertes Wort, das mit dem ersten Buchstaben beginnt, und/oder ein gespeichertes Bild, das einen diesem Wort entsprechenden Gegenstand oder Vorgang etc. zeigt, über das Mittel (5) zum Anzeigen angezeigt wird, und wobei neben dem Buchstaben auch das gespeicherte Wort den Ausspracheregeln konform akustisch ausgegeben wird. Diese Funktion wird als "sprechende Tastatur" bezeichnet. Beispielhaft wird die Funktion der "sprechenden Tastatur" wie folgt ausgeführt: Nach Aktivierung der Funktionalität etwa über eine Tastenfunktion wird beispielsweise über das Mittel zum Anzeigen der Buchstabe "G" eingegeben. Auf dem Mittel der Anzeige erscheint dann das Bild einer "Gurke" und darunter geschrieben "G" "Gurke" und über das Mittel der akustischen Ausgabe ertönt gleichzeitig eine Stimme mit "G wie Gurke", wobei das "G" lautiert und nicht buchstabiert wird. Der Benutzer lernt dadurch, den einzelnen Buchstaben ihren Klang zuzuordnen und gleichzeitig die Buchstabenanordnung auf der Tastatur. Mit Hilfe der "sprechenden Tastatur" des Gerätes können die Benutzer also erfahren, wie ein Buchstabe, der sie in diesem Moment interessiert, klingt (GPK), und dies - der Mobilität des Gerätes entsprechend - jederzeit und überall.

Vorzugsweise kann das Mittel zum Eingeben, das Mittel zum Anzeigen, das Mittel zur akustischen Wiedergabe und die Steuereinheit in einem Gehäuse angeordnet sein, wobei das Gehäuse eine Breite von bis zu 30 cm, insbesondere von bis zu 20 cm, eine Länge von bis zu 30 cm, insbesondere von bis zu 20 cm, und eine Höhe von bis zu 10 cm, insbesondere von bis zu 5 cm, aufweist und/oder wobei das Gewicht der Lernhilfe maximal 750 g, insbesondere maximal 500 g beträgt. Ein solches Lernhilfegerät, das weder zu groß noch zu schwer ist, kann der Benutzer - sei er ein Kind oder ein jugendlicher bzw. erwachsener Analphabet -, überall einsetzen und mitnehmen. Entsprechend weist dieses mobile Lernhilfegerät natürlich eine der mobilen Benutzung entsprechende Energieversorgung, wie beispielsweise Batterien oder Akkumulatoren, auf.

Günstigerweise kann dabei das Gehäuse so ausgebildet sein, dass daran ein Umhängemittel, insbesondere eine Schnur oder Kette, befestigt werden kann. Somit kann das Lernhilfegerät vom Benutzer umgehängt werden, so dass immer dann, wenn er ein Wort sieht, dies abgeschrieben werden kann. So kann beispielsweise ein Kind beim Spazieren gehen oder Autofahren Wörter, die es auf Schildern sieht, in das Gerät eingeben.

Um das Leselernhilfegerät möglichst kostengünstig anbieten zu können, kann das elektronische Leselernhilfegerät auf die beschriebenen Merkmale beschränkt sein, d.h. nur die beschriebenen Mittel und Komponenten umfassen. Ausreichend für den gewünschten Erfolg ist, dass mit den benutzten Hardwarekomponenten eine ausreichend naturgetreue Sprachausgabe der kombinierten Laute realisiert werden kann.

Vorteilhafterweise kann das mobile elektronische Leselernhilfegerät daher eine "embedded Lösung" enthalten, in der ein zentraler Prozessor (CPU) und die Speicherchipeinheit genau für die benötigten Mittel zur Eingabe und zur akustischen Wiedergabe und visuellen Anzeige (Lesesynthese, Display) sowie für die benötigte Steuereinheit zugeschnitten sind. Im Gegensatz zu den oben erwähnten Spielcomputern kann dadurch das elektronische Leselernhilfegerät allerdings einen hinreichend leistungsfähigen Chipsatz enthalten, der insbesondere die Anforderungen einer subphonembasierten und softwarespezifizierten naturgetreuen Lautsynthese entsprechen kann. Im Gegensatz zu bekannten Desktop-PCs und Laptops ist dabei bei vergleichbarer Sprachqualität der Aufbau des Leselernhilfegeräts wesentlich vereinfacht und somit kostengünstiger, da die Komponenten des Leselernhilfegeräts nur auf diese Anwendung beschränkt sind und nur diesen Anforderungen genügen.

Erfindungsgemäß umfasst das Verfahren unter Nutzung eines elektronischen Leselernhilfegeräts mit einem Mittel zum Eingeben eines Strings aus alphanumerischen Zeichens, einem Mittel zum Anzeigen des Strings, und einem Mittel zur akustischen Wiedergabe des Strings, die Schritte:
a) Erhalten eines alphanumerischen Zeichens, insbesondere eines Buchstabens, über das Mittel zum Eingeben,
b) Anzeigen eines Strings aus schon vorher eingegebenen Zeichen, insbesondere Buchstaben, und dem erhaltenen Zeichen, insbesondere Buchstaben, mit dem Mittel zum Anzeigen, und
c) akustisches Wiedergeben des Strings als Lautkombination gemäß den Ausspracheregeln, wobei
die Schritte a) bis c) insgesamt mindestens dreimal wiederholt werden und wobei die Schritte b) und c) automatisch durchgeführt werden

Dadurch, dass nicht nur die alphanumerischen Zeichen bzw. Buchstaben einzeln buchstabiert bzw. lautiert oder ganze Wörter ausgesprochen werden, sondern die Buchstabenkombination sukzessive lautiert - gemäß den Ausspracheregeln - ausgegeben wird, wird, wie bereits oben näher erläutert, der Leselernerfolg erheblich gefördert bzw. optimiert.

Vorteilhafterweise können dabei die Schritte b) und c) im Wesentlichen zeitgleich durchgeführt werden. Dies erhöht die Assoziierung einer Lautkombination mit der entsprechenden Buchstabenkombination.

Gemäß einer alternativen Ausführungsform kann auch vor dem Schritt a) ein in einer Speichereinheit gespeicherter String angezeigt werden. Der Benutzer der elektronischen Lerneinheit kann somit neben einer externen Vorlage, die er abschreibt und in das elektronische Leselernhilfegerät eingibt, auch auf die gespeicherten Worte oder Sätze oder Satzteile zurückgreifen, die ihm vom Mittel zum Anzeigen angezeigt werden.

Die Erfindung betrifft ebenfalls ein Verfahren unter Nutzung einer elektronischen Lernhilfe mit einem Mittel zum Eingeben eines Strings aus alphanumerischen Zeichen, insbesondere Buchstaben, einem Mittel zum Anzeigen des Strings, und einem Mittel zur akustischen Wiedergabe des Strings, mit den Schritten:
a) Erhalten eines alphanumerischen Zeichens, insbesondere eines Buchstabens, über das Mittel zum Eingeben,
b) Anzeigen des Zeichens und eines gespeicherten Worts, das mit dem Buchstaben beginnt, und/oder Anzeigen eines gespeicherten Bilds, das einen diesem Wort entsprechenden Gegenstand oder Vorgang etc. zeigt, über das Mittel zum Anzeigen, und
c) akustisches Wiedergeben des Zeichens als Laut und des gespeicherten Worts als Lautkombination gemäß den Ausspracheregeln mit dem Mittel zur akustischen Wiedergabe.

Mit diesem Verfahren lassen sich die Vorteile der sprechenden Tastatur verwirklichen.

Gemäß einer bevorzugten Ausführungsform können die Schritte a) bis c) wiederholt werden, wobei im Schritt b) und c) bei wiederholter Eingabe des Zeichens ein anderes dem Zeichen entsprechendes Wort bzw. ein anderer Gegenstand bzw. Vorgang etc. angezeigt und akustisch wiedergegeben werden. Vorteilhaft dabei ist, dass der Benutzer auf diese Weise die Elemente der Eingabe, hier vorzugsweise die Buchstaben, im Anlaut in verschiedenen Schrift- und Lautkontexten (Koartikulation) wahrnehmen und kennen lernen kann und somit speziell die Graphem-Phonem Korrespondenzen erlernt.

Die Erfindung betrifft weiterhin ein Computerprogramm mit Programmcode-Mitteln, um die Schritte dem oben beschriebenen Verfahren durchzuführen, wenn das Programm auf einem Computer ausgeführt wird. Somit kann für das elektronische Leselernhilfegerät auch ein Computer mit Tastatur, Bildschirm und Soundkarte herangezogen werden.

Die Erfindung betrifft ebenso ein computerlesbares Medium mit durch den Computer ausführbaren Anweisungen zum Ausführen des oben beschriebenen Verfahrens, wenn die Anweisungen auf einem Computer ausgeführt werden.

Ausführungsbeispiele der Erfindung sind in der Zeichnung dargestellt und werden nachstehend erläutert. Es zeigen:
- Fig. 1: schematisch die verschiedenen Elementen der erfindungsgemäßen elektronischen Lernhilfe,
- Fig. 2: eine tragbare Ausführungsform der erfindungsgemäßen Lernhilfe,
- Fig. 3: ein Flussdiagramm zur Erläuterung einer ersten Ausführungsform des erfindungsgemäßen Verfahrens,
- Fig. 4: ein Flussdiagramm zur Erläuterung einer zweiten Ausführungsform des erfindungsgemäßen Verfahrens und
- Fig. 5: ein Flussdiagramm zur Erläuterung einer dritten Ausführungsform des erfindungsgemäßen Verfahrens.

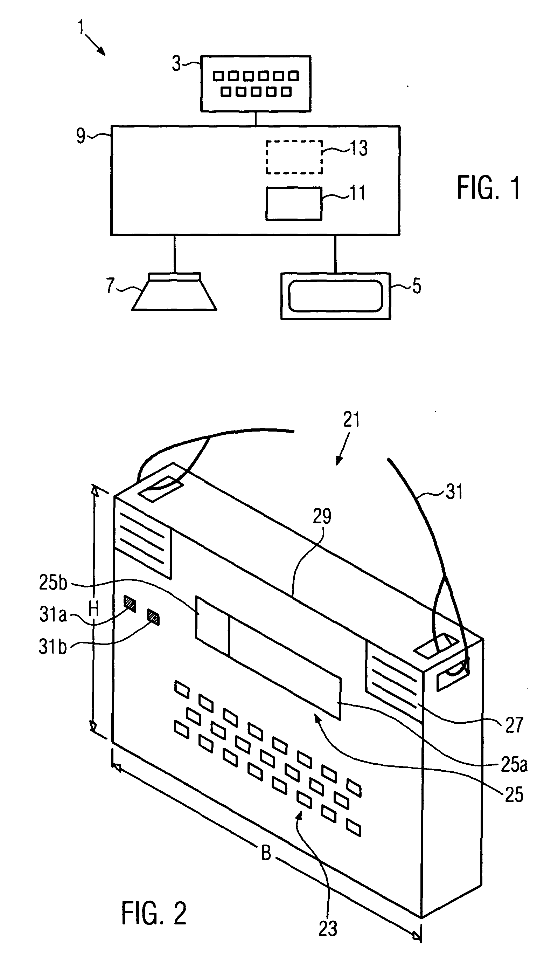

Fig. 1 zeigt schematisch ein elektronisches Leselernhilfegerät 1, das umfasst: ein Mittel 3 zum Eingaben eines Strings aus alphanumerischen Zeichen, insbesondere Buchstaben und/oder Ziffern, wie beispielsweise eine Tastatur, ein Mittel 5 zum Anzeigen des Strings, wie beispielsweise einen Bildschirm, insbesondere einen LCD-Bildschirm, dieser kann s/w oder farbig sein, ein Mittel 7 zur akustischen Wiedergabe des Strings, wie beispielsweise einen Lautsprecher eventuell zusammen mit einem Verstärker und/oder einer Kopfhöreranschlussmöglichkeit, sowie eine Steuereinheit 9. Das Eingabemittel 3, das Anzeigemittel 5 und das akustische Wiedergabemittel 7 sind jeweils mit der Steuereinheit 9 verbunden.

Die Steuereinheit 9 ist so ausgebildet, dass sie die Signale, die sie vom Eingabemittel 3 erhält, wobei den Signalen Buchstaben und/oder Ziffern entsprechen, bearbeitet und an das akustische Wiedergabemittel 7 bzw. als Anzeigesignale zum Anzeigemittel 5 weiterleitet. Insbesondere ist die Steuereinheit dabei so ausgebildet, dass folgend auf jede Eingabe eines Buchstaben eines Strings das akustische Wiedergabemittel 5 den bis zur letzten Eingabe eingegebenen String in seiner Gesamtheit den Ausspracheregeln konform als Lautkombination automatisch wiedergibt. Der Benutzer der elektronischen Lerneinheit 1 muss also nicht extra eine weitere Eingabetaste betätigen, um den eingegebenen String als Lautkombination hören zu können. Im Wesentlichen zeitgleich dazu kann der Benutzer der elektronischen Lernhilfe 1 den eingegebenen String auf dem Anzeigemittel 5 sehen. Bei eingegebenen Ziffern ist die Steuereinheit 9 so ausgebildet, dass die Ziffer als solche ausgesprochen wird und am Anzeigemittel 3 als Ziffer und/oder ausgeschrieben mit Buchstaben dargestellt wird.

Beim Lesenlernen kommt es darauf an, dass den gesehenen Buchstaben bzw. Buchstabenkombinationen entsprechende Laute bzw. Lautkombinationen sowie den gesehenen Ziffern die zugehörigen Lautkombinationen zugeordnet werden können. Es ist daher wichtig, dass die Qualität der akustischen Wiedergabe möglichst nahe an die natürliche Wiedergabe der Sprache gelangt. Dies wird insbesondere dadurch erzielt, dass die Steuereinheit 9 eine Sprachsyntheseeinheit 11 zum Erstellen eines akustischen Wiedergabesignals entsprechend dem eingegebenen String aufweist, wobei dieses erzeugte Wiedergabesignal dann vom akustischen Wiedergabemittel 7 ausgegeben werden kann.

Als Sprachsyntheseeinheit 11 wird vorteilhafterweise eine sub-phonembasierte Lautsyntheseeinheit verwendet, die Sprache nicht aufgrund elektronisch-algorithmischer Elemente bzw. Sequenzen synthetisiert, sondern die von einem menschlichen Sprecher gesprochenen und aufgenommenen Phoneme und Subphoneme mittels einer spezifischen Softwaresteuerung gemäß der Ausspracheregelen jeweils dem aktuellen String zuordnet.

Gemäß einer zweiten Ausführungsform kann das elektronische Leselernhilfegerät 1 auch noch zusätzlich eine Speichereinheit 13 aufweisen, in der Strings, insbesondere Wörter und Sätze oder Satzteile, gespeichert sind. In dieser Ausführungsform ist die Steuereinheit 9 dann so ausgebildet, dass ein Wort, das in der Speichereinheit 13 gespeichert ist, mit dem Anzeigemittel 5 angezeigt wird, bevor der Benutzer eine Eingabe über das Eingabemittel 3 macht.

Optional kann hier auch ein weiteres Mittel vorgesehen werden, mit dem der Benutzer seine eigenen Strings auch speichern und über eine Schnittstelle (nicht dargestellt) ausdrucken oder auf ein anderes elektronische Gerät (nicht dargestellt) übertragen kann.

Die Steuereinheit 9 des elektronischen Lesenlernhilfegeräts ist gemäß einer dritten Ausführungsform - der sprechenden Tastatur - so ausgebildet, dass auf die Eingabe eines Buchstabens oder einer Ziffer durch das Anzeigemittel 3 der eingegebene Buchstabe bzw. die Ziffer abgebildet wird, und dies vorzugsweise zusammen mit einem Bild, das einen Gegenstand oder einen Vorgang veranschaulicht, dessen Bezeichnung oder Name mit dem eingegebenen Buchstaben im Anlaut beginnt. Es wird also beispielsweise bei Eingabe des Buchstabens G ein Bild einer Gurke zusammen mit dem Buchstaben "G" und dem ausgeschriebenen Wort "Gurke" angezeigt. Gleichzeitig wird sowohl der eingegebene Buchstabe selbst lautiert als auch ein passender Gegenstand oder Vorgang zu dem Buchstaben über das akustische Ausgabemittel 7 vorgesprochen - also in diesem Beispiel "G wie Gurke". Die entsprechenden Begriffe und Bilder sind dabei in der Speichereinheit 13 abgespeichert.

Wird dann nochmals über das Eingabemittel 3 der identische Buchstabe eingegeben, kann sich der Vorgang mit einem anderen Item wiederholen - beispielsweise "G wie Glocke". Wird über das Eingabemittel 3 ein anderer Buchstabe eingegeben, erscheint über das Mittel zum Anzeigen 5 bzw. ein entsprechendes Item - beispielsweise bei dem Buchstaben A ein Bild eines Affen sowie der Buchstabe A und das Wort Affe. Gleichzeitig wird über das akustische Ausgabemittel 7 "A wie Affe" sprachregelkonform ausgegeben.

Bedeutsam ist, dass der Benutzer auf diese Weise die Elemente der Eingabe, vorzugsweise die Buchstaben, im Anlaut in verschiedenen Schrift- und Lautkontexten, der Koartikulation wahrnehmen und kennen lernen kann. Dies ermöglicht ein spezielles Erlernen der Graphem-Phonem Korrespondenzen.

Fig. 2 zeigt eine Ausführungsform des elektronischen Leselernhilfegeräts 1 als eigenständiges Gerät 21, das insbesondere von Kindern, aber auch von jugendlichen und erwachsenen Analphabeten, zum Lesenlernen benutzt werden kann. Wie aus Fig. 2 ersichtlich umfasst das Leselernhilfegerät 21 eine Tastatur 23 als Eingabemittel 3, ein Anzeigemittel 25, insbesondere einen LCD-Bildschirm (s/w oder farbig), Lautsprecher 27 als akustisches Wiedergabemittel, bzw zusätzlich oder anstatt Ohr- bzw. Kopfhörerbuchse (nicht dargestellt), sowie eine Steuereinheit 9, die sich im Gehäuse 29 des Leselernhilfegeräts 21 befindet. Die genannten Baugruppen des Leselernhilfegeräts entsprechen den in der Fig. 1 beschriebenen Bauteilen und haben entsprechend die gleichen Merkmale.

Für einen kindgerechten Gebrauch ist das Leselernhilfegerät 21 so ausgelegt, dass es eine Breite B von maximal 30 cm, insbesondere maximal 20 cm, eine Höhe H von maximal 30 cm, insbesondere maximal 20 cm, und eine Dicke von bis zu 10 cm, insbesondere maximal 5 cm aufweist, wobei das Gesamtgewicht des Leselernhilfegeräts maximal 750 g, insbesondere 500 g beträgt. Ein solches Gerät soll vorteilhafterweise ergonomisch sein undkann von einem Kind überallhin mitgenommen werden, in die Schule, im Auto, beim Spazieren gehen oder beim Spielen. Insbesondere kann am Gehäuse 29 eine Umhängeschnur 31 befestigt werden, so dass das Kind das Leselernhilfegerät umhängen kann.

Mit dieser tragbaren Ausführungsform wird erreicht, dass das Kind (oder ein Analphabet) immer dann, wenn es ein Wort oder Buchstaben sieht und wissen möchte, wie es ausgesprochen wird, diese in das elektronische Leselernhilfegerät 21 über die Tastatur 23 eingeben kann, wobei dann das Leselernhilfegerät sukzessive die Lautkombinationen ausspricht. Zur Verbesserung des Lesenlernens ist es dabei insbesondere wichtig, dass nicht nur die Buchstaben einzeln lautiert bzw. buchstabiert werden und dann das ganze Wort ausgesprochen wird, sondern, dass, sobald jeweils ein Buchstabe eingegeben wurde, die gesamte Lautkombination der voranstehenden Buchstaben zusammen mit dem letzteingegebenen Buchstaben den Ausspracheregeln konform ausgesprochen wird.

Das Leselernhilfegerät 21 weist in dieser Ausführungsform weiterhin einen zweigeteilten Bildschirm 25a, 25b auf, wobei der Bildschirm in einer weiteren Ausführungsform auch einteilig sein kann. Bildschirm 25a zeigt die vom Benutzer eingegebenen Buchstaben an, und Bildschirmabschnitt 25b dient dazu, eines der in einer Speichereinheit 13 der Steuereinheit 9 gespeicherte Wörter anzuzeigen. Somit kann das Leselernhilfegerät in zwei verschiedenen Betriebsmodi betrieben werden. Zum Umschalten weist die Tastatur 23 des Leselernhilfegeräts 21 weitere Tasten 31 a, 31 b auf. Der erste Modus - Lesesynthese - entspricht dem Eingeben von Buchstaben und dem anschließenden gleichzeitigen Anzeigen und lautiertem Aussprechen des eingegebenen Strings. Beim zweiten Modus - vgl. sprechende Tastatur - werden vorher abgespeicherte Begriffe angezeigt und akustisch wiedergegeben.. Dies kann vorteilhaft mit einer grafischen Darstellung des abzuschreibenden Begriffs verbunden werden. Der zweite Modus kann ebenso der Anzeige von ganzen Sätzen oder Satzteilen entsprechen, die optional auch in einer spezifischen Weise sukzessiv bzw. segmentiert hervorgehoben angezeigt werden können.

Der Einsatz des Gerätes und der damit verbundenen Methode zielt auf Erstleselerner (Kinder), auf Migranten (Kinder und Jugendliche) zur effizienten Unterstützung des Erst- und Zweitschriftspracherwerbs und auf funktionale Analphabeten (Jugendliche und Erwachsene) zur Überwindung der Leseschwäche ab. Für jede Zielgruppe kann sowohl das Lesegerät als auch das Begleitmaterial zielgruppenspezifisch gestaltet werden. Zur erhöhten Akzeptanz bei Kindern ist das Gehäuse 29 beispielsweise sowohl farblich als auch bezüglich der Form kindgerecht zu gestalten. Bei Erwachsenen mit Leseschwierigkeiten dagegen sollte das Gehäuse 29 unauffällig gestaltet werden.

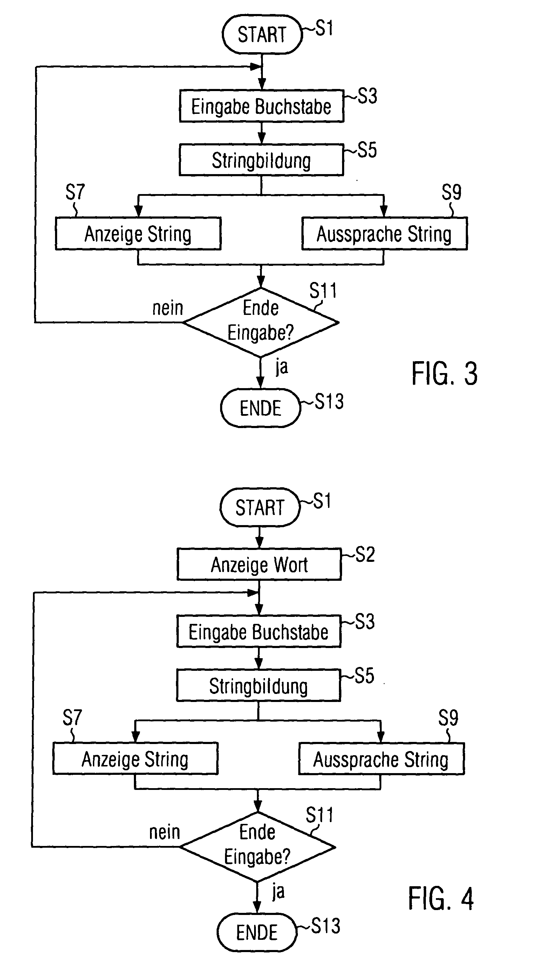

Fig. 3 zeigt eine erste Ausführungsform des erfindungsgemäßen Verfahrens unter Nutzung eines elektronischen Leselernhilfegeräts 1 mit einem Mittel 3 zum Eingeben eines Strings aus Buchstaben, einem Mittel 5 zum Anzeigen des Strings und einem Mittel 7 zum akustischen Wiedergeben des Strings gemäß einer der oben aufgeführten Ausführungsformen.

Nach dem Einschalten (Schritt S1) erhält das elektronische Leselernhilfegerät 1 von einem Benutzer über das Eingabemittel 3 ein Signal, das einem von dem Benutzer eingegebenen Buchstaben entspricht (Schritt S3).

Im darauf folgenden Schritt S5 bildet die Steuereinheit 9 aus dem eingegebenen Buchstaben und eventuell schon vorher eingegebenen Buchstaben einen String, der die zeitliche Reihenfolge der eingegebenen Buchstaben berücksichtigt. Beim ersten Durchlauf entspricht dem String der eingegebene Buchstabe.

Die nächsten beiden Schritte S7 und S9 werden im Wesentlichen automatisch, d.h. ohne eine weitere Eingabe des Benutzers, zeitgleich durchgeführt. Im Schritt S7 wird über das Anzeigemittel 5 der im Schritt S5 gebildete String angezeigt. Im Schritt S9 wird der gebildete String als Lautkombination den Ausspracheregeln konform über das akustische Wiedergabemittel 7 ausgegeben. Die entsprechenden Signale werden dabei in der Steuereinheit 9 gebildet. Insbesondere für die Sprachausgabe kann dabei eine Sprachsyntheseeinheit 11, wie im Zusammenhang mit der in der Fig. 1 gezeigten Ausführungsform schon beschrieben, benutzt werden.

Im Schritt S11 wird danach überprüft, ob die Eingabe beendet ist. Ist dies nicht der Fall, läuft das Verfahren wieder mit Schritt S3 weiter. Möchte der Benutzer die Anwendung beenden oder erhält das elektronische Leselernhilfegerät innerhalb eines vorbestimmten Zeitraums keine Eingabe, wird das Verfahren mit Schritt S13 beendet.

Fig. 4 zeigt eine zweite Ausführungsform des erfindungsgemäßen Verfahrens unter Nutzung eines elektronischen Leselernhilfegeräts. Dieses unterscheidet sich dadurch von der ersten Ausführungsform, dass zwischen Schritt S1 und Schritt S3 ein weiterer Verfahrensschritt S2 eingeführt wird. Gemäß Verfahrensschritt S2 wird auf dem Anzeigemittel 5 ein im elektronischen Leselernhilfegerät 1 vorher in einer Speichereinheit 13 abgespeicherter String, insbesondere ein Wort, angezeigt. Dieses Wort wird dann nachfolgend in den Schritten S3 bis S11 vom Benutzer nach und nach eingegeben. Diese Verfahrensschritte entsprechen denen der ersten Ausführungsform des erfindungsgemäßen Verfahrens.

Hier schreibt der Benutzer das auf dem Anzeigemittel dargestellte Wort ab und erhält gleichzeitig akustisch nach und nach die Lautkombination der schon eingegebenen Buchstabenkombination. Wird im Schritt S11 festgestellt, dass das gesamte angezeigte Wort abgeschrieben wurde, wird der Vorgang mit Schritt S13 beendet. Eventuell kann dann das Verfahren mit einem weiteren Wort aus der Speichereinheit 13 erneut durchgeführt werden.

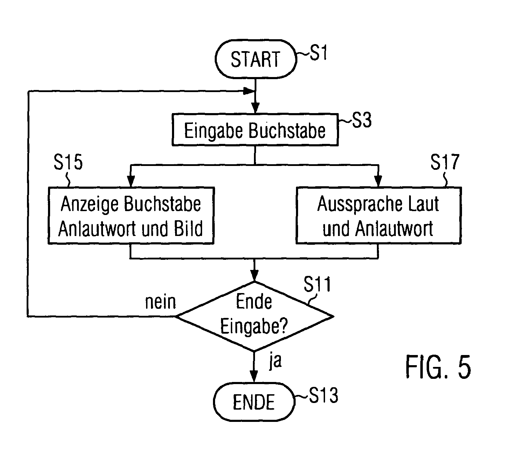

Fig. 5 zeigt eine dritte Ausführungsform des erfindungsgemäßen Verfahrens unter Nutzung eines elektronischen Leselernhilfegeräts, konfiguriert entsprechend der Ausführungsform der "sprechenden Tastatur". Diese unterscheidet sich von den ersten beiden Ausführungsformen dadurch, dass folgend der Eingabe eines Buchstabens (Schritt S3) durch das Anzeigemittel 5 der eingegebene Buchstabe vorzugsweise zusammen mit einem Bild, das einen Gegenstand oder einen Vorgang veranschaulicht, dessen Bezeichnung mit dem eingegeben Buchstaben im Anlaut beginnt - also beispielsweise bei Eingabe des Buchstabens G ein Bild einer Gurke - sowie das zugehörige ausgeschriebene Wort angezeigt werden (Schritt S15). Gleichzeitig werden im Schritt S17 sowohl der eingegebene Buchstabe selbst lautiert als auch ein passender Gegenstand oder Vorgang zu dem Buchstaben über das akustische Ausgabemittel vorgesprochen - also beispielsweise "G wie Gurke".

Wird dann nochmals über das Mittel der Eingabe der identische Buchstabe eingegeben, kann sich der Vorgang (Schritte S3, S15 und S17) mit einem anderen Item wiederholen - beispielsweise "G wie Glocke". Wird über das Eingabemittel 3 ein anderer Buchstabe eingegeben (erneut Schritt S3), erscheint über das Anzeigemittel 5 ein entsprechendes Item - beispielsweise bei dem Buchstaben A: "Bild eines Affen + A + Affe" (erneut Schritt S15) sowie über das akustische Ausgabemittel 7 ausgesprochen "A wie Affe" (erneut Schritt S17). Bedeutsam ist, dass der Benutzer auf diese Weise die Elemente der Eingabe, hier vorzugsweise die Buchstaben, im Anlaut in verschiedenen Schrift- und Lautkontexten (Koartikulation) wahrnehmen und kennenlernen kann und somit speziell die Graphem-Phonem Korrespondenzen erlernt.

Nachfolgend werden anhand dreier Beispiele tabellarisch die Funktionsweise des elektronischen Leselemhilfegeräts 1, bzw. des Leselernhilfegeräts 23, sowie die erfindungsgemäßen Verfahren erläutert. In den Tabellen zeigt Spalte 1 die Eingabe über das Eingabemittel 3, Spalte 2 die akustische Wiedergabe über das Wiedergabemittel 5 und die Spalte 3 die Anzeige am Anzeigemittel 5.

**Tabelle 1**

| Eingabe | Lautsprecher und/oder Kopfhörer | Anzeige |
|---|---|---|
| A | a: | A |
| B | ap | AB |
| E | a:be | ABE |
| N | a:ben | ABEN |
| D | a:bent | ABEND |

Wie aus Tabelle 1 ersichtlich gibt der Benutzer, beispielsweise ein Kind, nach und nach die Buchstaben "A", "B", "E", "N", "D" ein (wobei auf dem Mittel der Eingabe zwischen Groß- und Kleinschreibung unterschieden werden kann aber nicht muss). Am Bildschirm wird der String nach und nach angezeigt, bis das vollständige Wort erscheint. Im Gegensatz zu den bekannten Spielecomputern ergibt sich jedoch bei der akustischen Wiedergabe der Unterschied, dass folgend auf jede Eingabe automatisch der gesamte bis zu diesem Zeitpunkt eingegebene String lautiert den Ausspracheregeln entsprechend wiedergegeben wird, und nicht nur der jeweils zuletzt eingegebene Buchstabe.

Die sukzessive Sprachsynthese konfrontiert das Kind mit der wichtigen Erfahrung, dass die Laute je nach ihrer Umgebung unterschiedlich ausgesprochen werden müssen. Beispiel "Abend": Nach der Eingabe von nur "A" ist der A-Laut lang zu sprechen. Aber nach der Eingabe auch des zweiten Buchstaben, also von insgesamt "Ab", ist der A-Laut kurz zu sprechen. Während der Buchstabe "b" hier hart klingt (also "p"), ist er nach der Eingabe des dritten Buchstaben ("e"), also insgesamt "Abe", weich zu sprechen, (also "b"). Während hier der Buchstabe "e" schwachtonig gesprochen wird, wird er nach der Eingabe des vierten Buchstaben "n", also insgesamt "Aben" noch schwächer gesprochen. Nach Eingabe auch des letzten Buchstaben "d" klingt dieser dem Wort entsprechend "t" - nicht "d".

Im zweiten Beispiel wird entsprechend der zweiten Ausführungsform des erfindungsgemäßen Verfahrens vorzugsweise ein Wort am Bildschirm angezeigt.

**Tabelle 2**

| Anzeige des gespeicherten Wortes (mit Anlautbild) | Eingabe | Anzeige des eingegebenen Strings | Lautsprecher (Lautschrift) |
|---|---|---|---|
| nach Drücken der A-Taste z.B.: Anlautbild Abend dazu der Buchstabe "A", außerdem das Wort "Abend" | A | A | a: |
| | b | Ab | ap |
| | e | Abe | a:be |
| | n | Aben | a:ben |
| | d | Abend | a:bent |

Vor der Eingabe wird im Beispiel am Bildschirm 5 das einzugebende Wort " Abend" angezeigt. Der Benutzer schreibt dann nach und nach dieses Wort ab, indem er die entsprechenden Buchstaben über die Tastatur eingibt. Wie schon im ersten Beispiel wird dann jeweils der gesamte bis dahin eingegebene String automatisch lautiert ausgesprochen. Zum besseren Verständnis kann ein Bild des Anlauts angezeigt werden.

Im dritten Beispiel wird entsprechend der dritten Ausführungsform des erfindungsgemäßen Verfahrens ein Wort - vorzugsweise verknüpft mit einem dazu passenden Bild - am Bildschirm angezeigt sowie der Anlautbuchstabe als auch das Wort ausgesprochen.

**Tabelle 3**

| Eingabe | Lautsprecher | Anzeige |
|---|---|---|
| G | G wie Gurke | Bild "Gurke"Buchstabe "G" |
| | | Wort "Gurke" |

Bei Aktivierung dieser Funktion und beispielsweise Eingabe von "G" wird z. B. das Bild einer Gurke sowie der Buchstabe "G" selbst als auch das Wort "Gurke" angezeigt und gleichzeitig über die akustische Ausgabe "G wie Gurke" ausgesprochen wobei das "G" lautiert wird. Optionalerweise wird in diesem Modus bei nochmaligem Eingeben von beispielsweise "G" ein weiteres Wort mit dem Anfangsbuchstaben G sowohl mit Bild veranschaulicht als auch als Buchtstabe angezeigt und ausgesprochen (z. B. "G wie Gans"). Vorteilhafterweise wird diese Funktion auch vor allem dafür benutzt, um unterschiedliche Vokalqualitäten im Anlaut für den Benutzer erfahrbar zu machen - beispielsweise wird bei Eingabe von "I" z. B. "I wie Igel" angezeigt und ausgesprochen (das "I" klingt lang), bei nochmaliger Eingabe von "I" z. B. "I wie Imbiss" angezeigt und ausgesprochen (jetzt klingt das "I" kurz).

Erfindungsgemäß kann das elektronische Leselernhilfegerät 23 auch mit Hilfe eines Softwareprogramms auf einem Computer simuliert werden. Als Eingabemittel dient dann die Tastatur des Computers, als Ausgabemittel der Bildschirm des Computers und als akustisches Wiedergabemittel die Soundkarte mit den Lautsprechern des Computers.

## Patentansprüche

1. Elektronisches Leselernhilfegerät mit:
- einem Mittel (3) zum Eingeben eines Strings aus alphanumerischen Zeichen, insbesondere Buchstaben,
- einem Mittel (5) zum Anzeigen des Strings, und
- einem Mittel (7) zur akustischen Wiedergabe des Strings, wobei
eine Steuereinheit (9) so konfiguriert ist, dass folgend auf jede Eingabe eines alphanumerischen Zeichens, insbesondere Buchstabens, eines Strings das Mittel (5) zur akustischen Wiedergabe den bis zur letzten Eingabe eingegebenen String in seiner Gesamtheit den Ausspracheregeln konform als Lautkombination automatisch wiedergibt.

2. Elektronisches Leselernhilfegerät nach Anspruch 1, wobei die Steuereinheit (9) ferner so konfiguriert ist, dass die Anzeige des eingegebenen Strings und die akustische Wiedergabe im Wesentlichen zeitgleich stattfinden.

3. Elektronisches Leselernhilfegerät nach einem der Ansprüche 1 bis 2, wobei die Steuereinheit (9) eine Sprachsyntheseeinheit (11) zum Erstellen eines akustischen Wiedergabesignals entsprechend dem eingegebenen String aufweist, wobei das Wiedergabesignal vom Mittel (7) zur akustischen Wiedergabe ausgegeben wird.

4. Elektronisches Leselernhilfegerät nach einem der Ansprüche 1 bis 3, die ferner eine Speichereinheit (13) zum Speichern von Strings, insbesondere von Wörtern, aufweist und wobei die Steuereinheit (13) so konfiguriert ist, dass vor der Eingabe eines ersten alphanumerischen Zeichens, insbesondere Buchstabens ein gespeicherter String über das Mittel (5) zum Anzeigen angezeigt wird.

5. Elektronisches Leselernhilfegerät nach einem der Ansprüche 1 bis 4, die ferner eine Speichereinheit (13) zum Speichern von Wörtern und/oder Bildern aufweist und wobei die Steuereinheit (13) so konfiguriert ist, dass nach Eingabe eines ersten Buchstabens ein gespeichertes Wort, das mit dem ersten Buchstaben beginnt, und/oder ein gespeichertes Bild, das einen diesem Wort entsprechenden Gegenstand oder Vorgang zeigt, über das Mittel (5) zum Anzeigen angezeigt wird, wobei neben dem Buchstaben auch das gespeicherte Wort den Ausspracheregeln konform akustisch ausgegeben wird.

6. Elektronisches Leselernhilfegerät nach einem der Ansprüche 1 bis 5, wobei das Mittel (3) zum Eingeben, das Mittel (5) zum Anzeigen, das Mittel (7) zur akustischen Wiedergabe und die Steuereinheit (9) in einem Gehäuse (29) angeordnet sind, wobei das Gehäuse ein Breite von bis zu 30cm, insbesondere von bis zu 20cm, eine Höhe von bis 30cm, insbesondere von bis zu 20cm, und eine Dicke von bis zu 10cm, insbesondere von bis zu 5cm aufweist, und/oder wobei das Gewicht des Leselernhilfegeräts maximal 750gr, insbesondere 500gr, beträgt.

7. Elektronisches Leselernhilfegerät nach Anspruch 7 mit einem am Gehäuse (29) befestigbaren Urnhängemittel (31).

8. Elektronisches Leselernhilfegerät nach einem der Ansprüche 1 bis 7, mit einem zentralen Prozessor und einer Speicherchipeinheit, deren Eigenschaften auf die Anforderungen für das Mittel zur Eingabe (3), für das Mittel zur akustischen Wiedergabe (7), für das Mittel zum Anzeigen (5) und für die Steuereinheit (9) beschränkt sind.

9. Verfahren unter Nutzung einer elektronischen Lernhilfe (1) mit einem Mittel (3) zum Eingeben eines Strings aus alphanumerischen Zeichen, insbesondere Buchstaben, einem Mittel (5) zum Anzeigen des Strings, und einem Mittel (7) zur akustischen Wiedergabe des Strings, mit den Schritten:
a) Erhalten eines alphanumerischen Zeichens, insbesondere eines Buchstabens, über das Mittel (3) zum Eingeben (S3),
b) Anzeigen eines Strings aus schon vorher eingegebenen Zeichen, Insbesondere Buchstaben, und dem erhaltenen Zeichen, insbesondere Buchstaben, mit dem Mittel (5) zum Anzeigen (S7), und
c) akustisches Wiedergeben des Strings als Lautkombination gemäß den Ausspracheregeln mit dem Mittel (7) zur akustischen Wiedergabe (S9), wobei
die Schritte a) bis c) insgesamt mindestens dreimal wiederholt werden und wobei die Schritte b) und c) automatisch durchgeführt werden.

10. Verfahren nach Anspruch 9, wobei die Schritte b) und c) im Wesentlichen zeitgleich durchgeführt werden.

11. Verfahren nach Anspruch 9 oder 10, wobei vor dem Schritt a) ein in einer Speichereinheit gespeicherter String angezeigt wird (S2).

12. Verfahren unter Nutzung einer elektronischen Lernhilfe (1) mit einem Mittel (3) zum Eingeben eines Strings aus alphanumerischen Zeichen, insbesondere Buchstaben, einem Mittel (5) zum Anzeigen des Strings, und einem Mittel (7) zur akustischen Wiedergabe des Strings, mit den Schritten:
a) Erhalten eines alphanumerischen Zeichens, insbesondere eines Buchstabens, über das Mittel (3) zum Eingeben (S3),
b) Anzeigen des Zeichens und eines gespeicherten Worts, das mit dem Buchstaben beginnt, und/oder Anzeigen eines gespeicherten Bilds, das einen diesem Wort entsprechenden Gegenstand oder Vorgang zeigt, über das Mittel (5) zum Anzeigen (S15), und
c) akustisches Wiedergeben des Zeichens als Laut und des gespeicherten Worts als Lautkombination gemäß den Ausspracheregeln mit dem Mittel (7) zur akustischen Wiedergabe (S17).

13. Verfahren nach Anspruch 12, wobei die Schritte a) bis c) wiederholt werden, wobei im Schritt b) und c) bei wiederholter Eingabe des Zeichens ein anderes dem Zeichen entsprechendes Wort bzw. ein anderer Gegenstand oder Vorgang angezeigt und akustisch wiedergegeben werden.

14. Computerprogramm mit Programmcode-Mitteln, um die Schritte von einem oder mehreren der Ansprüche 7 bis 9 durchzuführen, wenn das Programm auf einem Computer ausgeführt wird.

15. Computerlesbares Medium mit durch den Computer ausführbaren Anweisungen zum Ausführen eines Verfahrens nach einem der Ansprüche 7 bis 9, wenn die Anweisungen auf einem Computer ausgeführt werden.
